(19) **Europäisches Patentamt**

**European Patent Office**

**Office européen des brevets**

(11) **EP 1 080 783 A2**

## (12) EUROPEAN PATENT APPLICATION

(43) Date of publication:
**07.03.2001 Bulletin 2001/10**

(51) Int. Cl.[7]: **B01J 23/58**, B01J 23/63,
B01D 53/94, B01J 37/02

(21) Application number: **00118746.7**

(22) Date of filing: **30.08.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **02.09.1999 JP 24863499**

(71) Applicant:
**TOYOTA JIDOSHA KABUSHIKI KAISHA
Aichi-ken 471-8571 (JP)**

(72) Inventor: **Ogura, Yoshitsugu
Toyota-shi, Aichi-ken, 471-8571 (JP)**

(74) Representative:
**Leson, Thomas Johannes Alois, Dipl.-Ing.
Patentanwälte
Tiedtke-Bühling-Kinne & Partner,
Bavariaring 4
80336 München (DE)**

(54) **Layered catalyst for purifying exhaust gas**

(57) A catalyst for purifying an exhaust gas, comprising a carrier base material, a supporting layer coated on the surface of the carrier base material, and Pt and NOx storing materials supported with the supporting layer, characterized in that the supporting layer has a two-layer structure of an upper layer and a lower layer and the concentration of Pt supported by the upper layer is higher than that of Pt supported by the lower layer.

# Fig.1

EP 1 080 783 A2

**Description**

BACKGROUND OF THE INVENTION

1. Field of the Invention

The present invention relates to a catalyst for purifying an exhaust gas and, more particularly, to a NOx storage reduction catalyst, for purifying an exhaust gas, which is used for purifying an exhaust gas discharged from an internal combustion engine of an automobile.

2. Description of the Related Art

As a catalyst for purifying an exhaust gas of an automobile, there has hitherto been used a three-way catalyst for purifying the exhaust gas by oxidizing CO and HC and reducing NOx in the exhaust gas simultaneously. As the three way catalyst, for example, there have widely been known those obtained by forming a supporting layer made of γ-alumina on a carrier base material made of cordierite and supporting a catalyst made of a noble metal such as platinum (Pt), palladium (Pd) and rhodium (Rh) with the supporting layer.

In view of protection of the global environment, carbon dioxide ($CO_2$), in an exhaust gas discharged from internal combustion engines of automobiles, has recently become a serious problem and a so-called lean-burn system for combusting a fuel in an excess oxygen atmosphere has been suggested as a means for solving this problem. In the lean-burn system, the amount of the fuel is reduced by improving the fuel cost, thereby making it possible to prevent an evolution of $CO_2$ as a combustion exhaust gas.

However, a conventional three way catalyst is used for purifying the exhaust gas, by oxidizing and reducing CO, HC and NOx in the exhaust gas simultaneously, when an air fuel ratio (A/F) is a stoichiometric air fuel ratio (abbreviated to "stoichiometric"). In the excess oxygen gas atmosphere of the lean-burn exhaust gas, the oxidizing reaction for purifying CO and HC is active but the reducing reaction for purifying NOx becomes inactive, thereby making it impossible to purify NOx.

Therefore, there has been developed a system for purifying NOx under lean-burn conditions by usually combusting the fuel under the lean conditions of excess oxygen and temporarily changing to the stoichiometric-enriched (close to stoichiometric air fuel ratio) conditions, thereby to convert the exhaust gas into a reducing atmosphere. In this system, there has been suggested a storage/reduction type catalyst for purifying an exhaust gas, using a NOx storing material which stores NOx in the lean atmosphere and releases the stored NOx in the stoichiometric-enriched atmosphere. When using such a catalyst, NOx is stored in the NOx storing material at the lean side and is released at the stoichiometric-enriched side by changing the air fuel ratio, in the form of a pulse, from the lean side to the stoichiometric-enriched side, thus purifying NOx as a result of the reaction with a reducing component such as HC and CO. Therefore, NOx can be efficiently purified even from the exhaust gas from a lean-burn engine.

However, a trace amount of a sulfur component is contained in the fuel and the sulfur component is oxidized on combustion or oxidized on the catalyst to produce SOx. Since the resulting SOx is acidic, whereas the NOx storing material is basic, SOx reacts with the NOx storing material to form a sulfate. As a result, the NOx storing capability of the NOx storing material is lost, thereby lowering the NOx purifying capability. This phenomenon has been known as a sulfur poisoning of the NOx storing material.

To solve the above problem, there has been suggested a catalyst comprising a supporting layer having a two-layer structure of an upper layer formed of particles having a large particle diameter and a lower layer formed of particles having a small particle diameter, the catalyst being capable of trapping SOx in the upper layer (Unexamined Patent Publication (Kokai) No. 9-253454).

This catalyst for purifying an exhaust gas is capable of trapping SOx by a filtering action of the upper layer. However, since the particle diameter of the particles constituting the upper layer of the supporting layer is large, choking of the upper layer due to heat or the poisoning component is inhibited and diffusion of NOx to the lower layer is not prevented. However, there is a possibility that SOx will also reach the lower layer.

Accordingly, an object of the present invention is to provide a catalyst for purifying an exhaust gas, capable of preventing SOx from reaching the NOx trapping layer.

SUMMARY OF THE INVENTION

To attain the above object, the present invention provides a catalyst for purifying an exhaust gas, comprising a carrier base material, a supporting layer coated on the surface of the carrier base material, and Pt and NOx storing materials supported by the supporting layer, characterized in that the supporting layer has a two-layer structure of an upper layer and a lower layer and the concentration of Pt supported by the upper layer is higher than that of Pt supported by the lower layer. When the concentration of Pt of the upper layer of the supporting layer is increased, the sulfur component is rapidly converted into SOx by oxidation in the upper layer and the NOx storing material is efficiently poisoned, thereby trapping SOx. Therefore, diffusion of SOx to the interior, i.e. lower layer, is prevented.

BRIEF DESCRIPTION OF THE DRAWINGS

Fig. 1 is a partially enlarged sectional view showing a catalyst for purifying an exhaust gas according to the present invention.
Figs. 2a and 2b are schematic diagrams for explaining a mechanism of trapping and releasing NOx.

DETAILED DESCRIPTION OF THE PREFERRED EMBODIMENTS

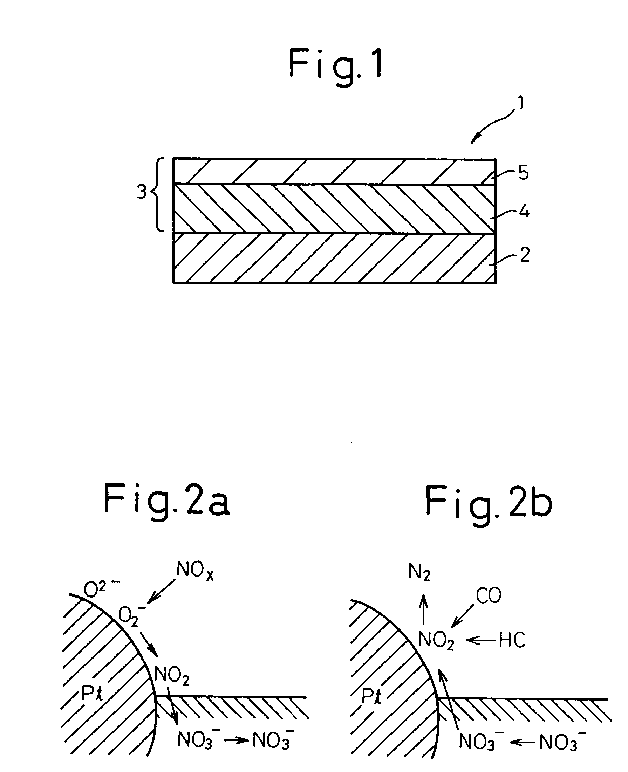

As shown in Fig. 1, the catalyst 1 for purifying an exhaust gas according to the present invention comprises a carrier base material 2 and a supporting layer 3 coated on the surface of the carrier base material. As the carrier base material 2, for example, a monolithic carrier base material made of a heat-resistant ceramic such as cordierite, and a metal carrier base material made of a metal foil are used. The supporting layer 3 is made of an oxide porous body, and alumina, silica, zirconia, silica-alumina and zeolite are used as the oxide porous body. The supporting layer is composed of a lower layer 4 and an upper layer 5, but the material of the oxide porous body of the lower layer and that of the upper layer may be the same or different.

A NOx storing material is supported with the supporting layer 3. As the NOx storing material, for example, there can be used at least one selected from the group consisting of alkali metals, alkali earth metals and rare earth elements. The alkali metals include, for example, lithium, sodium, potassium, rubidium, cesium and francium. The alkali earth metals include, for example, beryllium, magnesium, calcium, strontium and barium. The rare earth metals include, for example, scandium, yttrium, lanthanum, cerium, praseodymium and neodymium. The amount of the NOx storing material to be supported is preferably within a range from 0.05 to 0.5 moles per liter of the oxide porous body.

Furthermore, platinum (Pt) is supported by the supporting layer 3. In the catalyst for purifying an exhaust gas of the present invention, the amount of Pt supported in the supporting layer 3 is controlled to a normal amount, e.g. about 0.1 to 1 wt%, in the layer 4 of the supporting layer 3, while the amount is controlled to a higher concentration, preferably 1.5 wt% or more, in the upper layer 5. The reason why the concentration of Pt in the upper layer 5 of the supporting layer was increased in the present invention is as follows.

In a conventional NOx storage/reduction type catalyst for purifying an exhaust gas, a carrier base material is provided with a supporting layer on which a NOx storing material and a noble metal catalyst are supported. When this catalyst is disposed in an exhaust passage of an internal combustion engine, the supporting layer actually traps and releases NOx but the detailed mechanisms of these trapping and releasing actions are not completely clear. However, it is considered that these trapping and releasing actions are conducted based on the mechanisms shown in Figs. 2a and 2b. The mechanisms will now be described in the case where platinum Pt and barium are supported, but may be the same mechanisms even if other alkali metals, alkali earth metals and rare earth elements are used.

When the average air fuel ratio of the inflowing exhaust gas is considerably transferred to the lean side as compared with the stoichiometric air fuel ratio, the concentration of oxygen in the inflow exhaust gas increases drastically and oxygen $O_2$ is deposited on the surface of platinum Pt in the form of $O_2^-$ or $O^{2-}$ as shown in Fig. 2a. On the other hand, NO in the inflow exhaust gas reacts with $O_2^-$ or $O^{2-}$ on the surface of platinum Pt to produce $NO_2$

$$(2NO + O_2 \rightarrow 2NO_2).$$

A portion of the resulting $NO_2$ is absorbed in the supporting layer while being oxidized on platinum Pt, and then diffuses into the supporting layer in the form of a nitric ion $NO_3^-$, as shown in Fig. 2a, while combining with barium oxide BaO. In such way, NOx is trapped in the supporting layer.

As long as the concentration of oxygen in the inflow exhaust gas is high, $NO_2$ is produced on the surface of platinum Pt and, as long as the capacity to trap NOx in the supporting layer is not saturated, NOx is absorbed in the supporting layer to produce a nitric ion $NO_3^-$. On the other hand, when the concentration of oxygen in the inflow exhaust gas is lowered to thereby lower the amount of $NO_2$ produced, the reaction proceeds in the reverse direction

$$(NO_3^- \rightarrow NO_2),$$

thus releasing the nitric ion $NO_3^-$ in the trapping layer from the supporting layer in the form of $NO_2$. That is, when the concentration of oxygen in the inflow exhaust gas is lowered, the concentration of oxygen in the exhaust gas is lowered.

Therefore, when the degree of leanness of the inflow exhaust gas is lowered, NOx is released from the supporting layer.

On the other hand, the average air fuel ratio of the inflow exhaust gas is transferred to the rich side, particularly when the average air fuel ratio is fuel-rich as compared with the stoichiometric air fuel ratio, the exhaust gas contains a large amount of HC and CO, which are oxidized by reacting with $O_2^-$ or $O^{2-}$ on platinum Pt. When the average air fuel ratio of the inflow exhaust gas is transferred to the fuel-rich side, particularly when the average air fuel ratio is fuel-rich as compared with the stoichiometric air fuel ratio, since the concentration of oxygen in the inflow exhaust gas is lowered, $NO_2$ is released from the supporting layer and $NO_2$ is reduced by reacting with HC and CO, as shown in Fig. 2b. In such way, when $NO_2$ does not exist on the surface of platinum Pt, $NO_2$ is released successively released from the supporting layer. Accordingly, when the average air fuel ratio of the inflow exhaust gas is transferred to the fuel-rich side as compared with the stoichiometric air fuel ratio, NOx is released from the supporting layer within a short time. Even if the average air fuel ratio of the inflow exhaust gas is in the fuel-lean state, NOx is released from the supporting layer and the released NOx can be reduced.

In normal operation, the air fuel ratio of an air-fuel mixture to be combusted in the internal combustion engine is maintained in the lean state and, therefore, the air fuel ratio of the inflow exhaust gas becomes the lean state, thus preventing NOx in the exhaust gas from being trapped in the supporting layer and causing it to discharged into the air.

However, since there is a limit in capacity of NOx entrapped in the supporting layer, NOx must be released from the supporting layer before the capacity of NOx entrapped in the supporting layer is saturated. Therefore, the trapped NOx is released from the supporting layer and reduced by temporarily controlling the air fuel ratio of the air-fuel mixture to be combusted in the internal combustion engine to the fuel-rich state as compared with the stoichiometric air fuel ratio.

However, as described in the beginning, a sulfur component such as SOx is contained in the exhaust gas and not only NOx but also SOx can be trapped in the supporting layer. It is considered that the mechanism for trapping of SOx in the supporting layer is the same as that for trapping of NOx.

In the same manner as in case of describing the mechanism for trapping of NOx, the mechanism will be described below by way of the case where platinum Pt and barium are supported on the carrier. As described above, when the average air fuel ratio of the inflow exhaust gas is in the lean state as compared with the stoichiometric air fuel ratio, oxygen $O_2$ is deposited on the surface of platinum Pt in the form of $O_2^-$ or $O^{2-}$ and SOx in the inflow exhaust gas, e.g. $SO_2$, reacts with $O_2^-$ or $O^{2-}$ on the surface of platinum Pt to produce $SO_3$. The resulting $SO_3$ is absorbed in the supporting layer while being oxidized on the platinum Pt, and is then diffused in the supporting layer in the form of a sulfuric ion $SO_4^{2-}$. The sulfuric ion $SO_4^{2-}$ is then combined with a barium ion to produce a sulfate $BaSO_4$.

However, this sulfate $BaSO_4$ is hardly decomposed and is retained without being decomposed even if the average air fuel ratio of the inflow exhaust gas is transferred to the fuel-rich state. Accordingly, the amount of the sulfate $BaSO_4$ increases with a lapse of time, thus lowering the amount of NOx that can be trapped in the supporting layer with a lapse of time,

To solve this problem, the supporting layer has a two-layer structure of an upper layer and a lower layer and the concentration of Pt supported with the upper layer is higher than that of Pt supported with the lower layer in the present invention. As described above, the catalyst is poisoned with sulfur at the surface layer. When the concentration of the Pt of the upper layer of the supporting layer is increased, $SO_2$ in the exhaust gas flowing into the catalyst is rapidly converted into $SO_3$ because of high oxidation capability in the lean atmosphere and then $SO_3$ is given to the NOx storing material existing in the vicinity of Pt, e.g. Ba, thereby trapping it as a sulfate $BaSO_4$. In such way, SOx is trapped in the upper layer, while NOx reaches the lower layer after passing through the upper layer because of its larger diffusion rate than that of SOx. Since SOx is trapped in the upper layer, the NOx storing material is not poisoned in the lower layer and, therefore, NOx can be efficiently stored.

In the stoichiometric-rich atmosphere, since SOx is discharged by being separated from the upper layer, no poisoning of the NOx storaging material occurs. NOx passes through the upper layer after passing through the lower layer, and NOx is reduced by reacting with HC and CO in the exhaust gas, due to a catalytic action of Pt on passing through the upper layer, and is then purified and discharged. Since SOx is inhibited from diffusing to the lower layer by repeating adsorption and desorption only in the upper layer of the catalyst supporting layer, poisoning of NOx can be inhibited.

The thickness of the supporting layer is usually about 70 μm, but the thickness of the upper layer of the supporting layer is preferably controlled within a range from 10 to 20 μm. When the thickness of the upper layer as the portion containing high concentration of Pt is too small, SOx can not be sufficiently trapped in the upper layer and SOx diffuses to the lower layer, thereby poisoning the NOx storing material in the lower layer. On the other hand, when the thickness is too large, the cost increases and SOx diffuses to the deep portion, while diffusion of NOx is inhibited and the NOx storing material in the lower layer can not be employed effectively, thus lowering the NOx storage capability.

The following examples further illustrate the present invention in detail.

Example 1

A commercially available active alumina powder was dispersed in an aqueous Pt dinitrodiamine solution and the resulting dispersion was stirred for two hours, thereby supporting Pt in the amount of 1.8 g per 240 g of the alumina powder. This powder was dried at 120°C and then calcined in an air at 500°C for one hour. A cylindrical monolithic carrier having a diameter of 100 mm and a length of 130 mm was prepared and was wash-coated with a slurry comprising the above Pt-supported alumina powder, deionized water, aluminum hydroxide and deflocculating agent. The coating weight was 240 g per liter of the volume of the catalyst. The concentration of Pt was 0.75% by weight. Then, Pt was supported by the monolithic catalyst by dipping in deionized water containing 0.78 g of Pt. As a result of this operation, Pt was supported in the concentration of 2.75 wt% in the thickness of about 10 µm of the coated surface and supported in the concentration of 0.75 wt% in the interior. Furthermore, as the NOx storing material, Ba and K were supported by the monolithic catalyst in amounts of 0.2 moles and 0.1 moles, respectively, per liter of volume of the catalyst.

Example 2

In the same manner as in Example 1, an active alumina powder on which 0.5 wt% of Pt was supported was prepared and a cylindrical monolithic carrier having a diameter of 100 mm and a length of 130 mm was wash-coated in the coating weight of 240 g per liter of the volume of the catalyst. Then, Pt was supported by the monolith catalyst by dipping in deionized water containing 1.56 g of Pt. As a result of this operation, Pt was supported in the concentration of 2.5 wt% in the thickness of about 20 µm of the coated surface and supported in the concentration of 0.5 wt% in the interior. Furthermore, as the NOx storing material, Ba and K were supported by the monolith catalyst in amounts of 0.2 moles and 0.1 moles per liter, respectively, of volume of the catalyst.

Example 3

In the same manner as in Example 1, an active alumina powder with which 0.1 wt% of Pt was supported was prepared and a cylindrical monolithic carrier having a diameter of 100 mm and a length of 130 mm was wash-coated to a coating weight of 150 g per liter of the volume of the catalyst. Then, an active alumina powder in which 2.5 wt% of Pt was supported was prepared and the monolith catalyst was washed-coated with the powder to a coating weight of 90 g per liter of the volume of the catalyst. As a result of this operation, Pt was supported in the concentration of 2.5 wt% in the thickness of about 30 µm of the coated surface and supported in the concentration of 0.1 wt% in the interior. Furthermore, as the NOx storing material, Ba and K were supported by the monolithic catalyst in amounts of 0.2 moles and 0.1 moles, respectively, per liter of volume of the catalyst.

Example 4

In the same manner as in Example 1, an active alumina powder with which 0.57 wt% of Pt was supported was prepared and a cylindrical monolithic carrier having a diameter of 100 mm and a length of 130 mm was wash-coated to a coating weight of 210 g per liter of volume of the catalyst. Then, an active alumina powder in which 4 wt% of Pt was supported was prepared and the monolith catalyst was washed-coated with the powder to a coating weight of 30 g per liter of the volume of the catalyst. As a result of this operation, Pt was supported in the concentration of 4.0 wt% in the thickness of about 10 µm of the coated surface and supported in a concentration of 0.57 wt% in the interior. Furthermore, as the NOx storing material, Ba and K were supported by the monolith catalyst in amounts of 0.2 moles and 0.1 moles, respectively, per liter of volume of the catalyst.

Example 5

In the same manner as in Example 4, there was obtained a monolith catalyst in which Pt was supported in the concentration of 1.5 wt% in the thickness of about 10 µm of the coated surface and supported in a concentration of 0.93 wt% in the interior. Furthermore, as the NOx storing material, Ba and K were supported by the monolith catalyst in amounts of 0.2 moles and 0.1 moles, respectively, per liter of volume of the catalyst.

Example 6

In the same manner as in Example 4, there was obtained a monolith catalyst in which Pt was supported in the concentration of 2.0 wt% in the thickness of about 10 µm of the coated surface and supported in a concentration of 0.86 wt% in the interior. Furthermore, as the NOx storing material, Ba and K were supported by the monolith catalyst in amounts of 0.2 moles and 0.1 moles, respectively, per liter of volume of the catalyst.

Example 7

In the same manner as in Example 4, there was obtained a monolith catalyst on which Pt was supported in the concentration of 3.0 wt% in the thickness of about 10 μm of the coated surface and supported in the concentration of 0.71 wt% in the interior. Furthermore, as the NOx storing material, Ba and K were supported by the monolith catalyst in amounts of 0.2 moles and 0.1 moles, respectively, per liter of volume of the catalyst.

Comparative Example 1

In the same manner as in Example 1, 1 wt% of Pt was supported by an active alumina powder and a cylindrical monolithic carrier having a diameter of 100 mm and a length of 130 mm was wash-coated to a coating weight of 240 g per liter of volume of the catalyst to obtain a monolith catalyst with which 0.1 wt% of Pt has been supported entirely uniformly. Furthermore, as the NOx storing material, Ba and K were supported by the catalyst in amounts of 0.2 moles and 0.1 moles, respectively, per liter of the volume of the catalyst.

Comparative Example 2

In the same manner as in Example 4, there was obtained a monolith catalyst with which Pt was supported to a concentration of 2.0 wt% in the thickness of about 10 μm of the coated surface and supported in the concentration of 0.86 wt% in the interior. The NOx storing material could not be supported by the catalyst.

A multi-converter was packed with the catalyst for purifying an exhaust gas thus obtained and was attached to an exhaust system of a lean-burn engine, and then a modal operation was carried out for 50 hours. The sulfur content in the fuel was 200 ppm and the temperature of the catalyst-containing gas during the endurance running was 350°C in average and 600°C at maximum, respectively. Each catalyst was disassembled after the endurance test of 50 hours and examinations of the distribution and the deposition amount of Pt, Ba, K and S as well as an evaluation of the NOx storing capability were carried out. The NOx purification degree was determined as follows. That is, a pretreatment was carried out in a rich model gas corresponding to A/F (= 14.0) at the temperature of a catalyst-containing gas of 500°C for 10 minutes and, after changing into a lean model gas corresponding to A/F (= 21), the NOx purification degree at the temperature of a catalyst-containing gas of 350°C was measured. The results are shown in Table 2.

Table 1

| | CO % | $C_3H_8$ ppm | $CO_2$ % | $H_2O$ % | NO ppm | $O_2$ % | $N_2$ |
|---|---|---|---|---|---|---|---|
| Lean | 0.1 | 2000 | 10.5 | 4 | 500 | 6 | balance |
| Rich | 0.6 | 2000 | 10.5 | 4 | 500 | 0.3 | balance |

Table 2

| | Concentration of Pt in upper layer (wt%) | Thickness of upper layer (μm) | Concentration of Pt in lower layer (wt%) | Endurance | |
|---|---|---|---|---|---|
| | | | | NOx purification degree (%) | S/Ba (molar ratio) |
| Example 1 | 2.75 | 10 | 0.75 | 54 | 0.36 |
| Example 2 | 2.50 | 20 | 0.5 | 46 | 0.40 |
| Example 3 | 2.50 | 30 | 0.1 | 30 | 0.56 |
| Example 4 | 4.00 | 10 | 0.57 | 55 | 0.32 |
| Example 5 | 1.50 | 10 | 0.93 | 40 | 0.48 |
| Example 6 | 2.00 | 10 | 0.86 | 49 | 0.40 |
| Example 7 | 3.00 | 10 | 0.71 | 53 | 0.36 |

Table 2 (continued)

| | Concentration of Pt in upper layer (wt%) | Thickness of upper layer (μm) | Concentration of Pt in lower layer (wt%) | Endurance | |
| --- | --- | --- | --- | --- | --- |
| | | | | NOx purification degree (%) | S/Ba (molar ratio) |
| Comp. Example 1 | 1.00 | entirely uniform | 1.00 | 28 | 0.58 |
| Comp. Example 2 | 2.00 | 10 | 0.86 | 24 | 0.59 |

As is apparent from Table 1, Examples 1 to 7 wherein the concentration of Pt was high within a range from 10 to 20 μm of the upper layer of the supporting layer of the catalyst showed good endurance as compared with Comparative Example 1 wherein the concentration of Pt in the supporting layer was uniform. In this test, since the amount of Pt supported per volume of the catalyst was fixed, a noticeable effect of improving the performance could not be obtained when the thickness of the upper layer as a layer containing high concentration of Pt is increased. The reason is considered to be as follows. That is, since almost all of Pt is concentrated at the upper layer, the concentration of Pt in the lower layer becomes too low and the NOx storing material can not be effectively utilized. Even if the thickness of the upper layer is controlled to 10 μm as shown in Comparative Example 2, the effect of improving the performance could not be obtained when Ba and NOx storing materials are not present in this portion. As described above, it is considered to be necessary that the upper layer as a layer containing high concentration of Pt is preferably from about 10 to 20 μm and the NOx storing material coexists in the upper layer.

As is apparent from the results of sulfur analysis and results of elemental analysis by means of EPMA, a large amount of sulfur was deposited on the upper layer as the surface of the catalysts of Examples 1 to 7. However, sulfur was not deposited on Ba and K as the NOx storing material in the lower layer as the interior and sulfur poisoning was prevented. On the contrary, Ba and K in the interior were also poisoned in the catalyst of Comparative Example 1 wherein Pt is uniformly distributed. In the catalyst of Comparative Example 2 wherein the upper layer (10 μm) contains a high concentration of Pt but the NOx storing material does not exist, sulfur was hardly deposited on the upper layer as a layer containing a high concentration of Pt, and Ba and K in the interior were poisoned.

Pt oxidizes a $SO_2$ gas in the exhaust gas in a lean atmosphere thereby to accelerate poisoning of the NOx storaging material, but also serves to accelerate decomposition and desorption of a sulfate in a reducing atmosphere. It is considered that, when a high concentration of the Pt and NOx storing materials exist in the upper layer of the catalyst of the present invention, the NOx storing material in the upper layer is efficiently poisoned in a lean atmosphere and sulfur is hardly incorporated into the lower layer, while the sulfate in the upper layer in the upper layer is decomposed and adsorbed in a fuel-enriched state. On the other hand, it is considered that, when high concentration of Pt exists in the upper layer but the NOx storing layer does not exist, SOx produced efficiently by Pt in the lean state diffuses toward the lower layer thereby to poison the NOx storing material. It is also considered that a comparatively low concentration of Pt exists uniformly in the entire supporting layer in a conventional catalyst shown in Comparative Example 2 so that the oxidizing rate of $SO_2$ in the vicinity of the surface is small and $SO_2$ diffuses into the interior, thereby to poison not only the surface layer but also the NOx storing material in the interior.

A catalyst for purifying an exhaust gas, comprising a carrier base material, a supporting layer coated on the surface of the carrier base material, and Pt and NOx storing materials supported with the supporting layer, characterized in that the supporting layer has a two-layer structure of an upper layer and a lower layer and the concentration of Pt supported by the upper layer is higher than that of Pt supported by the lower layer.

**Claims**

1. A catalyst for purifying an exhaust gas, comprising a carrier base material, a supporting layer coated on the surface of the carrier base material, and Pt and NOx storing materials supported with the supporting layer, characterized in that the supporting layer has a two-layer structure of an upper layer and a lower layer and the concentration of Pt supported by the upper layer is higher than that of Pt supported by the lower layer.

2. The catalyst for purifying an exhaust gas according to claim 1, wherein the concentration of Pt supported by the upper layer is 1.5 wt% or more based on the weight of the supporting layer.

3. The catalyst for purifying an exhaust gas according to claim 1, wherein the thickness of the upper layer is from 10

to 20 μm.

4. The catalyst for purifying an exhaust gas according to claim 1, wherein the NOx storing material is at least one selected from an alkali metal, an alkali earth metal and a rare earth metal.

5. The catalyst for purifying an exhaust gas according to claim 1, wherein the amount of the NOx storing material is from 0.05 to 0.5 moles per liter of the supporting layer.

6. The catalyst for purifying an exhaust gas according to claim 1, wherein the concentration of Pt supported by the upper layer is 1.5 wt% or more based on the weight of the supporting layer and the concentration of Pt supported with the lower layer is from 0.1 to 1 wt% based on the weight of the supporting layer.

# Fig.1

# Fig.2a

# Fig.2b